(19) Europäisches Patentamt
European Patent Office
Office européen des brevets

(11) Veröffentlichungsnummer: **0 100 889**
**B1**

(12) # EUROPÄISCHE PATENTSCHRIFT

(45) Veröffentlichungstag der Patentschrift: **24.09.86**

(21) Anmeldenummer: **83106763.2**

(22) Anmeldetag: **09.07.83**

(51) Int. Cl.⁴: **C 08 L 27/18,** C 08 L 81/02, C 08 L 81/06, C 08 L 71/00, C 09 D 3/00, B 05 D 5/00

(54) **Grundierungsmittel für Überzüge aus Fluorkohlenstoffpolymeren mit einem Gehalt an Polyarylensulfid-Harz, aromatischem Polyethersulfon-Harz oder aromatischem Polyetherketon-Harz und dessen Verwendung.**

(30) Priorität: **20.07.82 DE 3227043**
**20.07.82 DE 3227044**
**20.07.82 DE 3227045**

(43) Veröffentlichungstag der Anmeldung: **22.02.84 Patentblatt 84/8**

(45) Bekanntmachung des Hinweises auf die Patenterteilung: **24.09.86 Patentblatt 86/39**

(84) Benannte Vertragsstaaten: **BE CH DE FR GB IT LI NL SE**

(56) Entgegenhaltungen:
**EP-A-0 014 974**
**EP-A-0 056 280**
**WO-A-80/00929**
**DE-A-2 800 609**
**FR-A-2 114 218**
**US-A-4 167 605**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Gebauer, Gerhard, Kampenwandstrasse 20, D-8261 Burgkirchen (DE)**

**EP 0 100 889 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Überzüge aus Fluorkohlenstoffpolymeren werden häufig in der Weise aufgebaut, daß zunächst eine Grundschicht auf das zu beschichtende Substrat aufgebracht wird, deren wesentliche Funktion es ist, die Haftvermittlung zwischen dem an sich schlecht haftenden Fluorkohlenstoffpolymeren und dem Substrat zu bewirken. Dabei kann das diese Grundschicht formende Grundierungsmittel auch Anteile des später als Deckschicht aufgetragenen Polymeren in Form einer kolloidalen Dispersion enthalten (Haftgrunddispersion). Auf die Grundschicht werden sodann eine oder ehrere Deckschichten aus Fluorkohlenstoffolymerenüblicherweise in Form kolloidaler Dispersionen - aufgetragen, wobei man bestrebt ist, zwecks rationeller Arbeitsweise beim Beschichtungsvorgang möglichst mit einer Schicht ausreichender Dicke auszukommen.

Von einem solchen Grundierungsmittel wird insbesondere gefordert, daß es sowohl zum zu beschichtenden Substrat als auch zu der aufzubringenden Deckschicht ein möglichst großes Haftvermögen besitzt und daß es einfach und fehlerfrei aufgetragen werden kann.

Die früher häufig verwendeten Grundierungsmittel, die Chromate als haftvermittelnde Komponente enthielten, sind heute wegen der Toxizität der Verbindungen des sechswertigen Chroms nur noch in Ausnahmefäilln in Gebrauch. Als Grundierungsmittel für Deckschichten aus Fluorkohlenstoffpolymeren eignen sich, wie in der DE-OS 1 959 144 beschrieben, Mischungen von kolloidalen Dispersionen von Fluorkohlenstoffpolymeren mit Lithiumpolysilicat oder, wie aus der DE-OS 2 110 768 bekannt ist, Mischungen von kolloidalen, wäßrigen Dispersionen von Fluorkohlenstoffpolymeren mit Lithiumhydroxid und darin feinteilig suspendiertem, auf thermischem Wege erzeugtem Siliciumdioxid. Vor der Aufbringung festhaftender Deckschichten aus Fluorkohlenstoffpolymeren müssen diese Grundierungsmittel nach dem Auftragen auf das Substrat bei Temperaturen von 80 bis 100 °C getrocknet und anschließend auf Temperaturen von 230 bis 400 °C erhitzt und sodann wieder auf Raumtemperatur abgekühlt werden. Erst nach dieser Wärmebehandlung, für die ein hoher Aufwand an Energie notwendig ist und durch die ein großer Teil der Ofenkapazität einer Beschichtungsanlage blockiert wird, ist es möglich, einen weiteren Überzug aus Fluorkohlenstoffpolymeren aufzutragen und dabei eine ausreichende Haftung zwischen Grundierung und Deckschicht zu erzielen.

In der EP-OS 14 974 ist ein Grundierungsmittel beschrieben, das sich einerseits aus Copolymeren von Tetrafluorethylen mit Perfluor(alkylvinyl)-ethern (wobei diese Copolymeren gegebenenfalls noch Hexafluorpropylen oder Vinylidenfluorid enthalten können), andererseits aus einem Gemisch von wäßriger Lithiumhydroxidlösung mit darin fein suspendiertem, auf thermischem Wege hergestelltem Siliciumdioxid zusammensetzt. Auf solche Grundierungsmittel können Deckschichten aus Fluorkohlenstoffpolymeren-Dispersionen aufgebracht werden, ohne daß eine aufwendige Trocknung und Temperung im Anschluß an das Aufbringen des Grundierungsmittels zwischengeschaltet werden muß.

Deckschichten aus Fluorkohlenstoffpolymeren haften vorzüglich auf einer mit dem genannten Gemisch gemäß EP-OS 14 979 hergestellten Grundschicht, wenn diese Grundschicht eine bestimmte kritische Schichtdicke, die etwa im Bereich von 10 um liegt, nicht überschreitet. Falls die Schichtdicke der Grundschicht wesentlich größer als 10 A0m ist, dann kann kein ausreichend fester Verbund zwischen Grundschicht und einer darauf aufgebrachten Deckschicht erzielt werden. Natürlich wird man aus Gründen der Wirtschaftlichkeit darauf bedacht sein, die Schichtdicke der Grundschicht möglichst klein zu halten, doch läßt es sich in vielen Fällen nicht verhindern, daß heim Auftrag der Grundschicht diejenigen Schichtdicken überschritten werden, bei denen noch ein fester Verbund zwischen Grund- und Deckschicht sicher gewährleistet ist. Dieser Fall tritt zum Deispiel ein bei der Durchführung einer Innenbeschichtung von Töpfen mit kleinen Durchmessern und hohen Seitenwänden mittels Spritzpistole. Um sicherzustellen, daß die gesamte Innenoberfläche mit der Grundschichtdispersion bedeckt ist, muß soviel Material aufgesprüht werden, daß die kritische Schichtdicke an einigen Stellen des Substrats bereits überschritten wird und deshalb an diesen Stellen keine ausreichende Haftung mehr erzielt werden kann. Ein weiteres Beispiel für das Auftreten größerer Schichtdicken an der Grundschicht sind Substrate mit gehämmertem Untergrund, wo in den kalottenförmigen Vertiefungen gleichfalls eine Einhaltung einer solchen Maximalschichtdicke praktisch nicht möglich ist.

Der Erfindung liegt deshalb die Aufgabe zugrunde, ein Grundierungsmittel für den späteren Auftrag von Deckschicht-Dispersionen aus Fluorkohlenstoffpolymeren zu entwickeln, welches auch bei Schichtdicken von über 10 Um gute Hafteigenschaften besitzt und auf das bereits nach der Trocknung an der Luft bei etwa Raumtemperatur ohne zwischenzeitliche Wärmebehandlung der Auftrag einer Deckschicht aus Fluorkohlenstoffpolymeren ohne Einbuße an diesen Hafteigenschaften erfolgen kann.

Diese Aufgabe wird gemäß der vorliegenden Erfindung gelöst durch ein Grundierungsmittel, bestehend aus

a) 100 Gewichtsteilen eines Copolymeren, bestehend aus 0,5 bis 11 Gew.-% an copolymerisierten Einheiten eines Perfluor(alkylvinyl)-ethers der Formel $CF_2{=}CF{-}OR$ worin R ein Perfluoralkylrest mit 1 bis 10 C-Atomen ist, aus 0 bis 12 Gew.-% an copolymnerisierten Einheiten des Hexafluorpopylens oder Vinylidenfluorids oder Gemischen. dieser beiden Monomeren und aus copolymerisierten Einheiten des Tetrafluorethylens sowie gegebenenfalls aus dispergierten Polytetrafluorethylen-Teilchen mit einer mittleren Teilchengröße von 0,05 bis 30 µm, wobei das Gewichtsverhältnis des genannten Copolymeren zu dispergiertem Polytetrafluorethylen 100: 0 bis 20: 80 beträgt,

b) 10 bis 250 Gewichtsteilen der Gewichtssumme von Lithiumhydroxid plus suspendiertes, feinteiliges, auf thermischem Wege erzeugtes $SiO_2$ wobei das Molverhältnis LiOH zu $SiO_2$ 1:0,5 bis 1:30 beträgt,

c) 10 bis 1000 Gewichtsteilen mindestens eines thermoplaüstischen Harzes aus der Gruppe $c_1$) der

Polyarylensulfid-Harze; $c_2$) der aromatischen Polyethersulfon-Harze; und $c_3$) der aromatischen Polyetherketon-Harze: sowie

d) Wasser als flüssigem Träger.

Das als Komponente a) eingesetzte Copolymere besteht aus 0,5 bis 11, vorzugsweise 0,8 bis 6,0 Gew.-% an copolymerisierten Einheiten eines Perfluor(alkylvinyl)ethers der Formel $CF_2{=}CF\text{-}OR$, worin R ein Perfluoralkylrest mit 1 bis 10, vorzugsweise ein geradkettiger mit 2 bis 4 und insbesondere mit 3 C-Atomen ist, und aus 0 bis 12, vorzugsweise 0 bis 3 Gew.-% an copolymerisierten Einheiten des Vinylidenfluorids oder vorzugsweise Hexafluorpropylens. Der Rest, jeweils bezogen auf das Gesamtgewicht des Copolymeren, besteht aus copolymerisierten Einheiten des Tetrafluorethylens. Insbesondere bevorzugt als Komponente a) ist ein Copolymeres, bestehend aus 0,4 bis 3,0 Gew.-% copolymerisierten Einheiten des Hexafluorpropylens und 0,8 bis 6,0 Gew.-% copolymerisierten Einheiten des Perfluor(propylvinyl)ethers, wobei ebenfalls der Rest aus copolymerisierten Einheiten des Tetrafluorethylens besteht. Die Herstellung solcher Copolymerer ist bekannt und beispielsweise beschrieben in den US-Patentschriften 3 132 123, 3 235 537, 3 528 954, 3 642 742, 3 635 926 und die der bevorzugten Terpolymeren in der U.S-Patentschrift 4 029 868 und in der deutschen Offenlegungsschrift 2 639 109.

Im erfindungsgemäßen Grundierungsmittel kann gegebenenfalls ein Teil der 100 Gewichtsteile des die Komponente a) ausmachenden, oben definierten Copolymeren durch im flüssigen Träger dispergierte Polytetrafluorethylen-Teilchen ersetzt sein, und zwar in einem Anteil bis zu 80, vorzugsweise bis zu 50 Gewichtsteilen. Somit beträgt das Gewichtsverhältnis von Copolymeren der oben definierten Art zu dispergiertem Polytetrafluorethylen innerhalb der Komponente a) 100: 0 bis 20: 80, vorzugsweise 100: 0 bis 50: 50. Dabei können diese Polytetrafluorethylen-Teilchen sowohl als Teilchen kolloidaler Größe dispergiert oder als Teilchen überkolloidaler Teilchengröße suspendiert sein. Die mittlere Teilchengröße dieser Polytetrafluorethylen-Teilchen soll 0,05 bis 30 µm betragen, bevorzugt ist ein Bereich von 0,1 bis 3 µ. Unter Polytetrafluorethylen soll dabei nicht nur das übliche hochmolekulare Polytetrafluorethylen verstanden werden, sondern dieser Begriff erfaßt im Sinne dieser Erfindung auch die sogenannten Polytetrafluorethylenwachse, die durch Abbau von hochmolekularem Polytetrafluorethylen oder durch Telomerisationsreaktionen von Tetrafluorethylen gebildet werden.

Sie besitzen eine Schmelzvikskosiät von 1 bis $10^7$, vorzugsweise von 10 bis $10^5$ pa s (gemessen mit dem Hochdruck-Kapillarviskosimeter bei 380 °C, 21 $kp/cm^2$ sionsdruck, Düsenabmessung 1 mm Durchmesser und 10 mm Länge, wie beschrieben in der DE-PS 24 14 389).

Bevorzugt sind jedoch diejenigen Grundierungsmittel, die als Fluorkohlenstoffpolymer-Komponente ausschließlich die Copolymeren in der Komponente a) enthalten.

Bezogen auf die 100 Gewichtsteile der Komponente a) enthält das erfindungsgemäße Grundierungsmittel als komponente b) ein Gemisch aus Lithiumhydroxid und im flüssigen Träger suspendiertem, feinteiligem, auf thermischem Wege erzeugtem Siliciumdioxid in einem Anteil von 10 bis 250 Gewichtsteilen, vorzugsweise 10 bis 100 Gewichtsteilen Feststoff. Das Molverhältnis von LiOH: $SiO_2$ in dieser Mischung beträgt 1: 0,5 bis;: 30, vorzugsweise 1: 2 bis 1: 12. Das im Rahmen dieser Mischung eingesetzte feinteilige, auf thermischem Wege hergestellte Siliciumdioxid ist ein Handelsprodukt. Es wird nach bekannten Verfahren entweder durch Verbrennung von bestimmten Siliciumverhindungen, wie zum Beispiel von $SiCl_4$ oder Siliciumwasserstoffen, in Gegenwart von Sauerstoff erzeugt oder durch Sublimation von Siliciumverbindungen, wie zum Beispiel von Quarz, Kieselsäure und anderen Silicium-Sauerstoff-Verbindungen, im Lichtbogen gewonnen. Dieses auf thermischem Wege hergestellte $SiO_2$ liegt fast ausschließlich in Form agglomerierter Teilchen vor, die eine relativ breite Teilchengrößen-Verteilung besitzen, die sich im Bereich 0,01 bis 50, vorzugsweise 0,05 bis 25 µm bewegt, wobei die mittlere Teilchengröße etwa bei 0,5 bis 40, vorzugsweise 2 bis 20 µm liegt.

Zur Herstellung solcher Siliciumdioxid-Suspensionen in einer Lithiumhydroxid-Lösung wird das Lithiumhydroxid in entsalztem Wasser gelöst und das feinkörnige, thersch behandelte $SiO_2$ eingerührt.

Als weitere Komponente c) enthält das erfindungsgemäße Grundierungsmittel mindestens ein thermoplastischrs Harz aus der Gruppe $c_1$) der Polyarylensulfid-Harze, $c_2$) der aromatischen Polyethersulfon-Harze und $c_3$) der aromatichen Polyetherketon-Harze, wobei der Terminus "mindestens ein thermoplastisches Harz" sowohl Gemische aus unterschiedlichen Spezies innerhalb der jeweiligen Gattung $c_1$), $c_2$) oder $c_3$) als auch Gemische, die aus mindestens zwei Vertretern aus den Gattungen $c_1$), $c_2$) und $c_3$) bestehen, einschließt. Dieses Harz ist, bezogen auf die 100 Gewichtsteile a), in einem Anteil von 10 bis 1000 Gewichtsteilen, vorzugsweise von 70 bis 300 Gewichtsteilen, im Grundierungsmittel enthalten.

Als Polyarylensulfid-Harze werden Polymere verwendet, wie sie insbesondere in der US-PS 3 354 129 beschrieben und definiert worden sind (in der Literatur auch gelegentlich als Polyarylenthioether bezeichnet). Polyarylensulfid-Harze können nach verschiedenen, in der Literatur beschriebenen Verfahren hergestellt werden. Solche Herstellungsmethoden sind beispielsweise beschrieben in den US-Patentschriften 2 513 188, 3 353 129, 3 495 125, 3 487 454, in der DE-AS 2 160 754 und in der britischen Patentschrift 962 941. Die Herstellung von Polyarylensulfid-Harzen kann bevorzugt in der Weise erfolgen (vgl. insbesondere die US-PS 3 354 129), daß man mehrfach mit Halogen substituierte ungesättigte Ringverbindungen insbesondere polyhalogenierte aromatische Ringverbindungen, in einem polaren organischen Lösungsmittel mit Alkalimetallsulfiden umsetzt. Die entstehenden Polymeren besitzen die Ringstruktur der polyhalogenierten Ringverbindungen, die durch Schwefelatome miteinander gekoppelt sind. Bevorzugt sind Polyarylensulfid-Harze mit wiederkehrenden Einheiten -R-S, in denen R einen Biphenyleneinen Naphthylen- oder einen Biphenylenether-Rest oder insbesondere einen Phenylen-Rest, der in o-, m- oder vorzugsweise p-Stellung gebunden ist, bedeutet, wobei

alle diese Reste mit Alkylresten von 1 bis 6 C-Atomen, insbesondere mit Methylgruppen substituiert sein können. Es können aber auch Polyarylensulfid-Harze verwendet werden, wie sie gemäß US-PS 2 513 188 durch Reaktion von polyhalogenierten Aromaten mit Schwefel oder anderen Metallsulfiden erhältlich sind, ebenso auch solche, wie sie gemäß GB-PS 962 941 durch Erhitzen von Metallsalzen von halogenierten Thiophenolen auf Polymerisationstemperatur gebildet werden.

Die innerhalb des erfindungsgemäßen Grundierungsmittels eingesetzten Polyarylensulfid-Harze sollen vorzugsweise eine Schmelztemperatur von 204 bis 482 °C besitzen, insbesondere eine Schmelztemperatur von 240 bis 420 °C. Die inhärente Viskosität dieser Polyarylensulfid-Harze soll, gemessen 0,25 gew.-%ig in Chlornaphthalin bei 206 °C, mindestens 0,1, vorzugsweise 0,1 bis 0,3 und insbesondere 0,13 bis 0,23 betragen. Bevorzugt im Rahmen dieser Erfindung sind Polyphenylensulfid-Harze, besonders die in p-Stellung substituierten Typen.

Thermoplastische, aromatische Polyethersulfone, wie sie innerhalb des erfindungsgemäßen Grundierungsmittels Anwendung finden, sind gekennzeichnet durch wiederkehrende Einheiten der allgemeinen Formel

$-Ar-SO_2-$.

Ar ist darin ein zweiwertiger aromatischer Rest, insbesondere

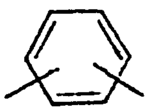 , 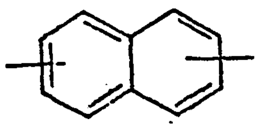 oder 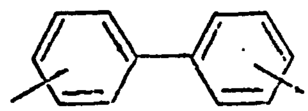 .

Dieser aromatische Rest kann gegebenfalls von Einheit zu Einheit in der Polymerkette variieren, wobei in dieser Kette mindestens einige Einheiten vorhanden sind, in denen Ar die Redeutung

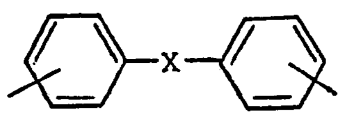

hat, worin X Sauerstoff ist. Desgleichen kann X auch der Rest eines aromatischen Diols sein, wie er sich in der Formel

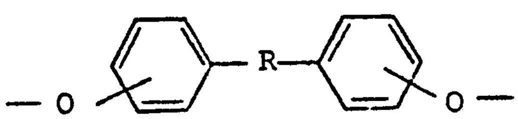

ausdrückt, worin R ein Alkylenrest mit 1 bis 6 C-Atomen, vorzugsweise ein solcher der Formel $-C(CH_3)^{2}-$ ist.

Beispiele für solche in den Polyethersulfonen wiederkehrenden Einheiten, die in wechselnden Kombinationen anwesend sein können, sind

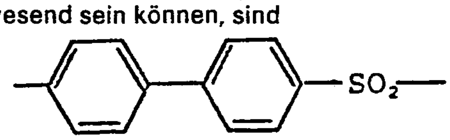

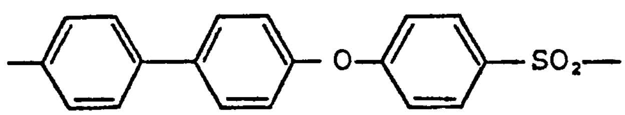

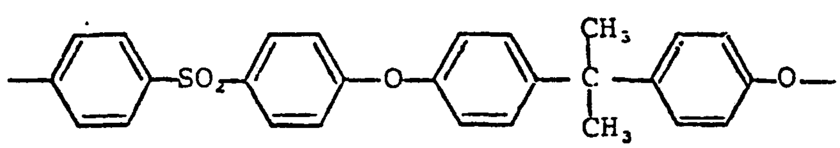

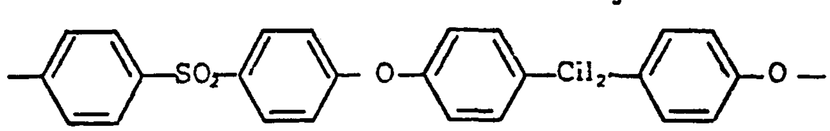

und vorzugsweise

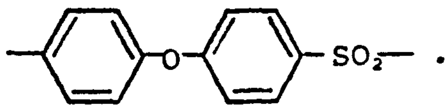

Thermoplastische aromatische Polyethersulfon-Harze und die Verfahren zu ihrer Herstellung sind dem Fachmann bekannt.Vertreter dieser Klasse von hochtemperaturbeständigen, thermoplastischen Harzen und Verfahren zu ihrer Herstellungsind beispielsweise bekannt aus den US-Patentschriften 3 264 536, 3 321 449, 3 355 272 und 3 634 355, aus den britischen Patentschriften 10 16 245, 10 60 546, 10 78 234, 11 09 842, 11 22 192, 11 33 561, 11 53 528. 11 63 332, 11 77 183, 12 34 301, 12 64 900, 12 65 144, 12 86 673, 12 96 383, 12 98 821 und 13 03 252, der kanadischen Patentschrift 847 963, den deutschen Offenlegungsschriften 19 38 806 und 24 33 400 und aus der schweizerischen Patentschrift 491 981.

Auch verzweigte aromatische Polyethersulfone, wie sie in der deutschen Offenlegungsschrift 23 05 413 beschrieben sind, können verwendet werden. Besonders vorteilhaft ist der Einsatz in Form wäßriger Dispersionen oder Suspensionen, wie sie beschrieben werden in der europäischen Patentanmeldung 32 630.

Die im Rahmen des erfindungsgemäßen Grundierungsmittels eingesetzten Polyethersulfon-Harze sollen im allgemeinen eine reduzierte Viskosität im Bereich von 0,03 bis 0,6 (gemessen bei 25 °C an einer Lösung von 1 g des Polymeren in 100 $cm^3$ Dimethylformamid) besitzen.

Thermoplastische aromatische Polyetherketone, wie sie innerhalb des erfindungsgemäßen Grundierungsmittels Anwendung finden, sind gekennzeichnet durch sich wiederholende Einheiten der allgemeinen Formel

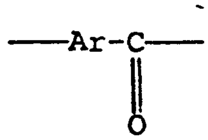

Ar ist darin ein zweiwertiger aromatischer Rest, insbesondere

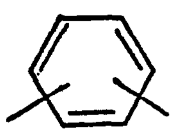 , 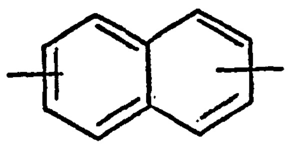 oder 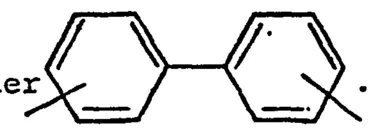

Dieser aromatische Rest kann gegebenenfalls von Einheit zu Einheit in der Polymerkette variieren, wobei zumindest einige Einheiten Ethergruppen enthalten, das heißt Ar die Bedeutung

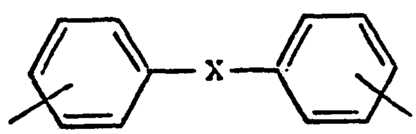

hat, worin X Sauerstoff ist. Desgleichen kann X auch der Rest eines aromatischen Diols sein, wie er sich in der Formel

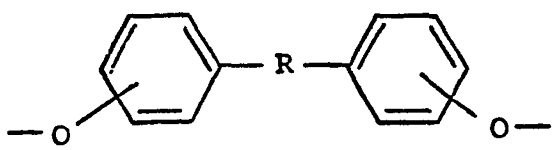

ausdrückt, worin R ein Alkylenrest mit 1 bis 6 C-Atomen, vorzugsweise ein solcher der Formel $-C(CH_3)_2-$ist.

Beispiele für solche in Polyetherketonen wiederkehrende Einheiten, die in wechselnden Kombinationen anwesend sein können, sind

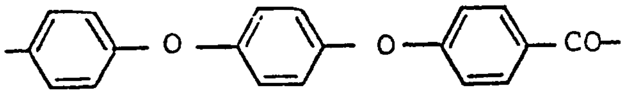

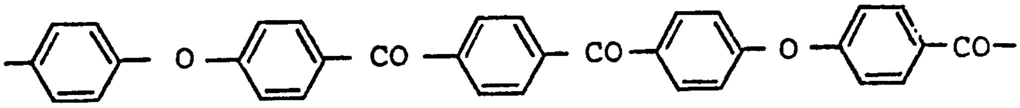

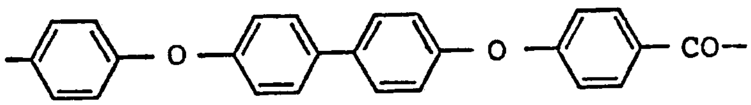

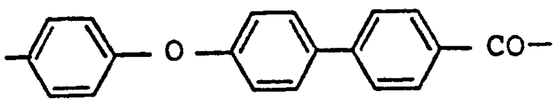

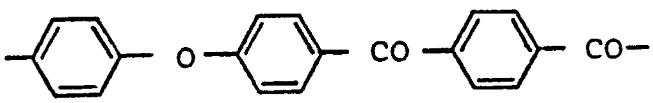

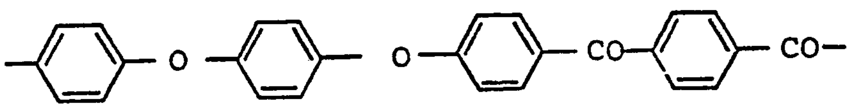

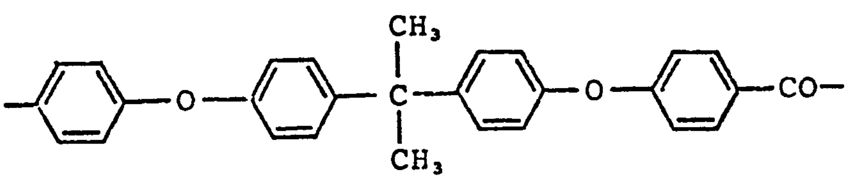

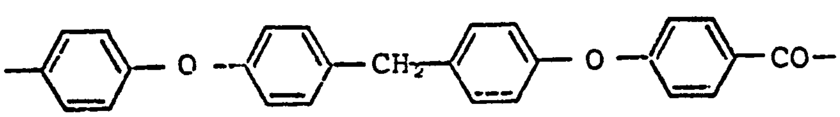

,

vorzugweise

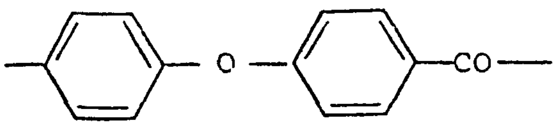

Thermoplastische aromatische Polyetherketon-Harze sind dem Fachmann bekannt. Vertreter dieser Klasse von hochtemperaturbeständigen, thermoplastischen Harzen und Verfahren zu ihrer Herstellung sind beispielsweise bekannt aus den US-Patentschriften 3 751 398, 3 914 298, 3 925 307, 3 953 400, 3 956 240, 3 965 146, 4 024 314, 4 111 908, den britischen Patentschriften 971 227, 1 019 226, 1 019 458, 1 078 234, 1 086 021, 1 102 679, 1 153 527, 1 164 817, 1 177 183, 1 383 393, 1 387 303, 1 414 421, 1 414 422, 1 414 423, 1 567 190 und der europäischen Offenlegungsschrift 1 879.

Die für das erfindungsgemäße Grundierungsmittel verwendeten Polyetherketone sollen im allgemeinen eine inhärente Viskosität von 0,01 bis 0,4 besitzen. Die inhärente Viskosität wird an einer Lösung von 1 g Polyetherketon in 100 $cm^3$ konzentrierter Schwefelsäure bei 25 °C gemessen.

Das erfindungsgemäße Grundierungsmittel enthält schließlich als Komponente d) Wasser als flüssigen Träger. Der Anteil der Komponente d) ist nicht kritisch, jedoch sollten gewisse Grenzen in bezug auf den Gesamtfeststoff (Gewichtssumme a + b + c) eingehalten werden. Das Verhältnis von Gesamtfeststoff zu Wasser sollte zweckmäßig 10: 90 bis 60: 40, vorzugsweise 20: 80 bis 40: 60 betragen. Für einige Anwendungsfälle ist es von Vorteil, einen Anteil von 1 bis 20 Gew.-% des als flüssiqen Träger verwendeten Wassers durch ein mit Wasser mischbares und feuchthaltendes organisches Lösemittel, wie Glycerin, ein Glykol odereinen Glykolether, zu ersetzen, um die Trocknungsgeschwindigkeit des Grundierungsmittels zu vermindern.

Gegebenenfalls können dem erfindungsgemäßen Grundierungsmittel noch die üblichen Füllstoffe und Pigmente, wie zum Beispiel Eisenoxid, Ruß, Glimmer und Titandioxid zugesetzt werden, wobei der Anteil 1 bis 40, vorzugsweise 5 bis 25 Gew.-%, bezogen auf das Gesamtgewicht der Komponenten a) plus b) plus c), beträgt.

Das in der Komponente a) enthaltene Copolymere wird vorzugsweise in Form einer kolloidalen Dispersion mit einer mittleren Teilchengröße von 0,05 bis 3 µm eingesetzt. Dafür können kolloidale Dispersionen mit einem Feststoffgehalt von 10 bis 20 Gew.-% an Polymer-Feststoff verwendet werden, wie sie direkt aus der Emulsionspolymerisation der genannten Comonomeren erhältlich sind. Zweckmäßigerweise werden solche Dispersionen jedoch zunächst mittels bekannter Methoden, beispielsweise durch Dekantieren oder durch einen Ultrafiltrationsprozeß (wie beschrieben in der europäischen Patentanmeldung 15 481) auf einen Polymer-Feststoffgehalt von 20 bis 60 Gew.-% aufkonzentriert. Die Copolymeren der Komponente a) können jedoch auch in Form eines aus kolloidalen Dispersionen durch Koagulation (beispielsweise durch Ausrühren unter Anwendung hoher Scherkräfte oder durch Zusatz von Elektrolyten) gewonnenen Pulvers eingesetzt werden. Derartige Pulver werden dann in Wasser aufgeschlämmt, wobei die so erhaltenen Dispersionen mittlere Teilchengrößen im Bereich von 3 bis 30 µm aufweisen. Schließlich können auch Suspensionspolymerisate verwendet werden, wie sie durch das Verfahren der Suspensionspolymerisation der genannten Comonomeren erhältlich sind, die gleichfalls eine mittlere Teilchengröße von 3 bis 30 µm aufweisen oder auf diese Teilchengröße gemahlen werden können, wobei diese Pulver ebenfalls Teilchengrößen im Bereich 3 bis 30 µm für den Einsatz im erfindungsgemäßen Grundierungsmittel besitzen sollen.

Die Komponente c) wird vorzugsweise in Form einer wäßrigen Suspension zugesetzt. Die Suspension wird durch Mahlen der Harzkomponente in Wasser mit den Üblichen Abreibaggregaten, wie Kugelmühlen oder Rührwerkskugelmülen hergestellt. Der Feststoffgehalt dieser Suspension beträgt üblicherweise 10 bis 60 Gew.-%, vorzugsweise 20 bis 40 Gew.-%. Zur Stabilisierung ist es zweckmäßig, der Suspension vor dem Abreiben 0,5 bis 15 Gew.-%, vorzugsweise 1 bis 10 Gew.-%, eines anionischen oder nichtionischen, oberflächenaktiven Dispergiermittels zuzusetzen, wie beispielsweise Natriumlaurylsulfat oder oxethylierte Octylphenole.

Vorzugsweise wird das erfindungsgemäße Grundierungsmittel in der Weise hergestellt, daß man wäßrige Suspensionen oder kolloidale Dispersionen des Copolymeren der Komponente a) mit der zuvor beschriebenen wäßrigen Suspension der Komponente b), bestehend aus dem Gemisch aus LiOH, und auf thermischem Wege hergestelltem $SiO_2$, und der Suspension, welche die Komponente c) enthält, zusammenmischt. Der gewünschte Gehalt an wasser als flüssigem Träger wird entweder durch geeignete Konzentration der zu mischenden Komponenten vorgegeben oder durch nachträgliche Wasserzugabe eingestellt.

Falls in der Komponente a) dispergiertes Polytetrafluorethylen anwesend ist, wird dieses ebenfalls zweckmäßigerweise als wäßrige Suspension oder kolloidale Dispersion zugemischt. Die Reihenfolge des Zusammenmischens kann beliebig erfolgen. Werden jedoch einer der beiden Anteile der Komponente a) oder beide als Pulver eingesetzt, so kann dieses Pulver bereits zusammen mit der Komponente c) als Suspension in einem Abreibaggregat vermahlen werden. Gegebenenfalls kann auch die Komponente b) beim Mahlprozeß anwesend sein. Werden die Anteile der Komponente a) in Form einer kolloidalen wäßrigen Dispersion

verwendet, so sollte diese erst nach dem Mahlprozeß ugesetzt werden. Falls das erfindungsgemäße Grundierungsmittel Pigmente enthält, werden diese zweckmäßigerweise zusammen mit der Komponente c) gemahlen. Sie können jedoch auch zu a) oder b) oder deren Mischungen zugemischt werden.

Der Auftrag des erfindungsgemäßen Grundierungsmittels erfolgt nach bekannten Methoden, wie beispielsweise durch Tauchen, Aufwalzen oder Aufspritzen. Bei einem Auftrag werden Schichtdicken von etwa 5 bis 40 µm erzielt. Zuvor wird der zu beschichtende Untergrund, falls es sich um eine glatte Oberfläche handelt, zweckmäßigerweise durch Sandstrahlen oder ätzen aufgerauht.

Nach dem Auftrag und anschließend kurzzeitigem Trocknen der Grundierung an der Luft bei Raumtemperatur oder wenig darüber (15 bis 40 °C) kann bereits die Deckschicht, bestehend aus Fluorkohlenstoffpolymeren, aufgetragen werden. Gegebenenfalls kann auf diese Trocknung sogar verzichtet werden und die Deckschicht auf die noch feuchte Grundschicht aufgebracht werden. Der Vorteil des erfindungsgemäßen Grundierungsmittels gegenüber den aus der EP-OS 14 974 bekannten Grundierungsmitteln, die nur die Komponenten a) und b) und einen flüssigen Träger enthalten, besteht darin, daß auch bei Schichtdicken der Grundierung von über 10 µm hervorragende Hafteigenschaften von Deckschichten aus Fluorkohlenstoffpolymeren erreicht werden. Das erfindungsgemäße Grundierungsmittel eignet sich deshalb vorzüglich für die Beschichtung von kompliziert geformten Gegenständen, bei denen aufgrund ihrer Form kein gleichmäßis dünner Schichtauftrag möglich ist und deshalb die kritische Schichtdicke überschritten wird, bei der mit den bekannten Grundierungsmitteln keine ausreichende Haftung mehr erzielt werden kann.

Als Deckschicht kann eine Polytetrafluorethylen-Dispersion verwendet werden, die gegebenenfalls mit bekannten Additiven, wie Pigmenten, anionischen, kationischen und/ oder nichtionischen Netzmitteln, Verlaufmitteln und Hilfsfilmbildnern versehen ist. Als Netzmittel haben sich beispielsweise bewährt mit 8 bis 10 mol Ethylenoxid oxethyliertes Octylphenol oder Natriumlaurylsulfat, als Verlaufmittel werden Toluole und als Hilfsfilmbildner zum Beispiel kleine Anteile von Siliconharzen, wie in den US-Patentschriften 2 462 242 und 2 470 593 beschrieben, verwendet. Auch andere hochtemperaturbeständige thermoplastische Harze, wie Polyethersulfone, Polyarylensulfide, Polyamidimide und Polyimide sind als Hilfsfilmbildner geeignet.

Als Deckschicht sind ferner geeignet Dispersionen von Copolymeren, hergestellt aus Perfluor(alkylvinyl)-ethern und Tetrafluorethylen und gegebenenfalls noch einem Drittmonomeren, wie Hexafluorpropylen oder Vinylidenfluorid, insbesonderein der gleichen Zusammensetzung wie die Copolymerender Komponente a). Geeignet sind jedoch auch andere Copolymere des Tetrafluorethylens mit fluorierten, insbesondere perfluorierten Monomeren, wie beispielsweise die seit langem bekannten Copolymeren des Tetrafluorethylens mit Hexafluorpropylen. Auch Mischungen von kolloidalen Polytetrafluorethylen-Dispersionen und solchen Copolymer-Dispersionen können als Deckschicht Verwendung finden. Derartige Zusammensetzungen können wie die Polytetrafluorethylen-Dispersionen mit Pigmenten, Netzmitteln, Verlaufmitteln und Filmbildnern modifiziert werden.

Nach dem Auftrag der Deckschicht wird der gesamte Überzug bei 80 bis 300 °C getrocknet und anschließend bei 290 bis 460 °C vorzugsweise bei 320 bis 400 ° eingebrannt. Die Trocknungs- und Einbrennzeit beträgt zweckmäßig je 5 bis 30 Minuten.

Das erfindungsgemäße Grundierungsmittel wird bevorzugt zur Herstellung von Grundierungen für festhaftende Antihaftbeschichtungen für Koch-, Back-, Brat- und Grillvorrichtungen, aber auch von Gleitelementen und Dosiervorrichtungen verwendet werden, wobei die zu beschichtenden Gegenstände so geformt sein können, daß kein gleichmäßiger Schichtauftrag des Grundierungsmittels möglich ist.

Die Erfindung wird durch folgende Beispiele noch näher erläutert:

**Beispiel 1**

<u>Mischung A</u>

Durch Rüren wird eine Suspension aus
500 g Polyphenylensulfid (Schmelzpunkt 280 °C)
50 g Farbruß
25 g eines nichtionischen Netzmittels (Octylphenol, oxethyliert mit im Mittel 9 Ethylenoxid-Einheiten), und
2000 g Wasser
hergestellt. Die Mischung wird auf einer Kugelmühle 18 Stunden gemahlen.

<u>Mischung B</u>

11,2 g Lithiumhydroxid werden in 182 g entsalztem Wasser gelöst. In diese Lösung werden 28 g auf thermischem Wege hergestelltes Siliciumdioxid eingerührt und mit einem Propellerrührer 1 Stunde dispergiert. Die Suspension wird 24 Stunden stehengelassen. Anschließend werden 280 g einer Dispersion eines Terpolymeren, welches aus 1,5 Gew.-% an copolymerisierten Hexafluorpropylen-Einheiten, 3,5 Gew.-% an copolymerisierten Perfluor (propylvinyl)-ether-Einheiten und 95 Gew.-% an copolymerisierten Tetrafluorethylen-Einheiten besteht, einen Schmelzpunkt von 307 °C und einen Schmelzindex von 30 g/10 min (372 °C; 5 kg Belastung) besitzt, dazugerührt. Diese Dispersion wurde vorher durch Dekantieren auf einen Feststoffgehalt von 50 Gew.-% aufkonzentriert. Durch Verschneiden von 239,5 g Mischung A mit 200 g der Mischung B wird eine Grundschichtdispersion hergestellt. Die Grundschichtdispersion wird mittels

Spritzpistole auf Aluminiumplatten bis zu einer Schichtstärke von 20 µ afgetragen. Die Oberfläche der Aluminiumplatten wurde zuvor durch Sandstrahlen mit Korund (100 bis 120 µm Korngröße) bis zu einer Tiefe von 5 bis 10 µm aufgerauht.

Die beschichteten Aluminiumplatten werden 10 Minuten bei Raumtemperatur stehengelassen, und anschließend wird eine Deckschichtdispersion mittels Spritzpistole aufgetragen. Diese Dispersion besitzt folgende Zusammensetzung: 100 Gewichtsteile einer 60 gew.-%igen Polytetrafluorethylen-Dispersion, 1 Gewichtsteil Natriumlaurylsulfat, 6,1 Gewichtsteile eines nichtionischen Netzmittels (Octylphenol oxethyliert mit im Mittel 9 Ethylenoxid-Einheiten) 3 Gewichtsteile Glykol, 1 Gewichtsteil Farbruß, 17,1 Gewichtsteile Titandioxid, 10 Gewichtsteile einer Lösung von 50 Gew.-% Siliconharz in Ethylacetat und Xylol (2: 1), 5 Gewichtsteile Xylol und 5 Gewichtsteile Tetralin. Beide Schichten werden 10 Minuten bei 90 °C und 10 Minuten bei 250 °C getrocknet und 10 Minuten bei 420 °C eingebrannt.

Auf der erhaltenen Beschichtung wird die Haftfestigkeit nach DIN 53 151 (Gitterschnitt-Test) geprüft. Man erhält eine Haftfestigkeit von GT 0.

**Beispiel 2**

0,746 g Lithiumhydroxid werden in 82 g entsalztem Wasser gelöst. In diese Lösung werden 7,5 g auf thermischem Wege hergestelltes Siliciumdioxid eingerührt und mit einem Propellerrührer 1 Stunde dispergiert. Die Suspension wird 24 Stunden stehengelassen. Anschließend werden 159 g einer Dispersion eines Terpolymeren dazugerührt. Das Terpolymere besteht aus 94,1 Gew.-% an copolymerisierten Tetrafluorethylen-Einheiten, 1,5 Gew.-% an copolymerisierten Hexafluorpropylen-Einheiten und 4,4 Gew.-% an copolymerisierten Perfluor(propylvinyl)-ether-Einheiten und besitzt einen Schmelzpunkt von 304 °C. Der Schmelzindex beträgt 24,5 g/10 min bei einer Belastung von 5 kg und bei 372 °C. Die Dispersion wurde vorher durch Dekantieren auf einen Feststoffgehalt von 50 Gew.-% aufkonzentriert.

Zu 200 g dieser Mischung werden 361 g.der Mischung A aus Beispiel 1 unter Rühren hinzugefügt. Die dann erhältene Mischung wird, wie in Beispiel 1 beschriehen, auf sandgestrahlte Aluminiumplatten aufgetragen und 10 Minuten bei Raumtemperatur stehengelassen. Anschließend wird mittels Spritzpistole eine Deckschichtdispersion mit folgender Zusammensetzung aufgetragen: 100 Gewichtsteile einer 60 gew.-%igen Polytetrafluorethylen-Dispersion, 1 Gewichtsteil Natriumlaurylsulfat, 6,1 Gewichtsteile eines nichtionischen Netzmittels (Octylphenol, oxethyliert mit im Mittel 9 Ethylenoxid-Einheiten), 3 Gewichtsteile Glykol, 1 Gewichtsteil Farbruß, 17,1 Gewichtsteile Titandioxid, 15 Gewichtsteile einer 40 gew.-%igen wäßrigen Suspension von Polyphenylensulfid und 5 Gewichtsteile Xylol. Beide Schichten werden 10 Minuten bei 90 °C und 10 Minuten bei 250 °C getrocknet und 10 Minuten bei 420 °C eingebrannt.

Auf der erhaltenen Beschichtung wird die Haftfestigkzit nach DIN 53 151 (Gitterschnitt-Test) geprüft. Man erhält eine Haftfestigkeit von GT 0.

**Beispiel 3**

3,1 g Lithiumhydroxid werden in 106 g entsalztem Wasser gelöst. Zu dieser Lösung werden 30,9 g auf thermischem Wege hergestelltes Siliciumdioxid dazugerührt. Die erhaltene Suspension wird 24 Stunden stehengelassen. Anschließend werden 110 g einer Dispersion, die 50 Gew.-% eines Terpolymeren, welches die Zusammensetzung 88,5 Gew:% an copolymerisierten Tetrafluorethylen-Einheiten, 9 Gew.-% an copolymerisierten Vinylidenfluorid-Einheiten und 2,5 Gew.-% an copolymerisierten Perfluor(propylvinyl)ether-Einheiten, einen Schmelzindex (372 °C, 5 kg) von 9,7 g/min und einen Schmelzpunkt von 310 °C besitzt, unter Rühren zugesetzt. Zu 200 g dieser Mischung werden 542 g der Mischung A aus Beispiel 1 unter Rühren hinzugefügt. Die so hergestellte Grundschichtdispersion wird wie in Beispiel 1 auf sandgestrahlte Aluminiumplatten aufgetragen. Nach einer Ablüftzeit von 10 Minuten wird eine 60 Gew.-% Feststoff enthaltende Polytetrafluorethylen-Dispersion aufgetragen. Dann werden beide Schichten 10 Minuten bei 90 °C und dann 10 Minuten bei 250 °C getrocknet und 10 Minuten bei 400 °C eingebrannt.

Die Haftfestigkeit einer so hergestellten Beschichtung beträgt nach DIN-Norm 53 151 GT 0.

**Beispiel 4**

4,7 g Lithiumhydroxid werden in 198 g entsalztem Wasser gelöst. In dieser Lösung werden 47 g auf thermischem Wege hergestelltes $SiO_2$ wie in Beispiel 1 beschrieben, eingerührt. Die Suspension wird 24 Stunden stehengelassen. Danach werden 100 g einer Diskersion, die 50 Gew.-% eines Terpolymeren enthält, und anschließend 50 g einer Dispersion mit 50 Gew.-% an hochmolekularem Polytetrafluorethylen dazugemischt. Das Terpolymere besteht aus 94,1 Gew.-% an copolymerisierten Tetrafluor&thylen-Einheiten, 1,5 Gew-% an copolymerisierten Hexafluorpropylen-Einheiten und 4,4 Gew.-% an copolymerisierten

Perfluor(propylvinyl)-ether-Einheiten und besitzt einen Schmelzpunkt von 304 °C. Der Schmelzindex beträgt 24,5 g/10 min bei einer Belastung von 5 kg und bei 372 °C. Zu 200 g dieser Mischung werden unter Rühren 542 g der in Beispiel 1 beschriebenen Mischung A hinzugefügt. Die so erhaltene Grundschichtdispersion wird, wie in Beispiel 1 beschrieben, auf sandgestrahlte Aluminiumplatten aufgetragen und gemäß Beispiel 2 mit dort beschriebener Deckschichtdispersion beschichtet, und anschließend werden Grund- und Deckschicht getrocknet und eingebrannt, wie dort beschrieben.

Die Haftfestigkeit nach DIN-Norm 53 151 beträgt GT 0 bis GT 1.

**Beispiel 5**

Beispiel 4 wird wiederholt mit der Abänderung, daß in der Grundschicht anstelle der Dispersion von Polytetrafluorethylen mit dem üblichen hohen Molekulargewicht 50 g einer Dispersion mit 50 Gew.-% Polytetrafluorethylen-Wachs mit einer Schmelzviskosität von $10^3$ Pa s eingesetzt werden, das durch Emulsionspolymerisation von Tetrafluorethylen in Gegenwart von Chloroform hergestellt worden ist.

Der erhaltene Überzug besitzt eine Haftfestigkeit nach dem Gitterschnitt-Test von GT 0.

**Beispiel 6**

11,2 g Lithiumhydroxid werden in 475,2 g entsalztem Wasser gelöst und anschließend werden 111,8 g auf thermischem Wege hergestelltes Siliciumdioxid eingerührt. Diese Suspension wird 24 Stunden stehengelassen. Anschließend werden 277,2 g einer 50 gew.-%igen wäßrigen Suspension aus einem Copolymeren hinzugemischt. Das Copolymere besteht aus 3,3 Gew.-% an copolymerisierten Perfluor(Propylvinyl)-ether-Einheiten und 96,7 Gew.-% an copolymerisierten Tetrafluorethylen-Einheiten und besitzt einen Schmelzindex von 12,5 g/10 min bei einer Belastung von 5 kg und bei 372 °C. Zu 200 g der so hergestellten Suspension werden 200 g der Mischung A aus Beispiel 1 hinzugefügt, sodann wird, wie in Beispiel 1 beschrieben, diese Grundschicht auf sandgestrahlte Aluminiumplatten aufgetragen und mit der Deckschicht gemäß Beispiel 1 versehen. Die 10 Minuten bei 90 °C und 10 Minuten bei 250 °C getrocknete und 10 Minuten bei 420 °C eingebrannte Beschichtung besitzt eine Haftfestigkeit nach DIN 53 151 von GT 0.

**Beispiel 7**

Zu 500 g einer 9 %igen Polyethersulfon-Suspension werden unter Rühren 28,2 g eines pulverförmigen Terpolymeren hinzugefügt. Die Mischung wird in einer Rührwerk-Kugelmühle gemahlen. Die Polyethersulfon-Suspension wird wie folgt hergestellt: In 3000 g Methylenchlorid werden unter Rühreh 600 g Polyethersulfon, welches im wesentlichen wiederkehrende Einheiten der Formel

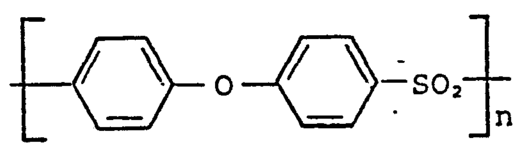

enthält und eine reduzierte Viskosität von 0,5 besitzt, gelöst. 30 Minuten nachdem sich das Polyethersulfon vollständig gelöst hat, wird unter Rühren eine Lösung, bestehend aus 30 g eines nichtionischen Netzmittels (Octylphenol mit im Mittel 4,5 Ethylenoxid-Einheiten) und 2970 g Methylenchlorid hinzugefügt. Die Mischung wird in einer Rührwerk-Kugelmühle gemahlen. Anschließend werden unter Rühren 3 kg Methanol zugefügt. Die so erhaltene Suspension wird abfiltriert und mit soviel Methanol gewaschen, bis der Filterkuchen nicht mehr nach Methylenchlorid riecht. Danach wird der Filterkuchen in 5 kg Wasser aufgenommen und nochmals filtriert und mit Wasser methanolfrei gewaschen. Der so behandelte Filterkuchen wird wieder in 5 kg Wasser aufgenommen und 50 g eines nichtionischen Netzmittels (Octylphenol mit im Mittel 9 Ehtylenoxid-Einheiten) hinzugefügt. Die Mischung wird anschließend mit einem hochtourigen Rührer vom Typ Ultra-Turrax homogenisiert.

Das beigemischte Terpolymere besteht aus 1,5 Gew.-% an coyolymerisierten Hexafluorpropylen-Einheiten, 3,2 Gew.-% an copolymerisierten Perfluor(propylvinyl)-ether-Einheiten sowie 95,3 Gew.-% an copolymerisierten Tetrafluorethylen-Einheiten und besitzt einen Schmelzpunkt von 310°C und einen Schmelzindex von 15 g/10 min bei 372 °C und 5 kg Belastung. In 100 g Wasser werden 1,6 g Lithiumhydroxid gelöst und unter Rühren 15,8 g auf thermischem Wege hergestelltes Siliciumdioxid hinzugefügt. Die Mischung wird nach 24stündigem Stehen mit der oben beschriehenen Mischung vereinigt.

Die Grundschichtdispersion wird mittels Spritzpistole auf Aluminiumplatten bis zu einer Schichtstärke von 20 µm aufgetragen. Die Oberfläche der Aluminiumplatten wurde zuvor durch Sandstrahlen mit Korund (100 bis 120

µm Korngröße) bis zu einer Tiefe von 5 bis 10 µm aufgerauht. Die beschichteten Aluminiumplatten werden 10 Minuten bei Raumtemperatur stehengelassen und anschließend wird eine Deckschichtdispersion mittels Spritzpistole aufgetragen. Diese Dispersion besitzt folgende Zusammensetzung: 100 Gewichtsteile einer 60 gew.-%igen Polytetrafluorethylen-Dispersion, 1 Gewichtsteil Natriumlaurylsulfat, 6,1 Gewichtsteile eines nichtionischen Netzmittels (Octylphenol, oxethyliert mit im Mittel 9 Ethylenoxid-Einheiten), 3 Gewichtsteile Glykol, 1 Gewichtsteil Farbruß, 17,1 Gewichtsteile Titandioxid, 15 Gewichtsteile einer 40 gew.%igen wäßrigen Polyethersulfonsusyension. Beide Schichten werden 10 Minuten bei 90 °C und 10 Minuten bei 250 °C getrocknet und 10 Minuten bei 420 °C eingebrannt.

Die erhaltene Beschichtung besitzt eine Haftfestigkeit nach DIN 53 151 von GT 0.

**Beispiel 8**

Mischung C

In 1000 g entsalztem Wasser werden 15 g eines nichtionischen Netzmittels (Octylphenol oxethyliert mit im Mittel 9 Ethylenoxid-Einheiten) gelöst. Zu dieser Lösung werden unter Rühren 250 g eines Polyethersulfon-Harzes und 25 g Farbruß hinzugefügt. Die Mischung wird auf einer Kugelmühle 18 Stunden gemahlen.

Das verwendete Polyethersulfon besteht aus wiederkehrenden Einheiten der Formel

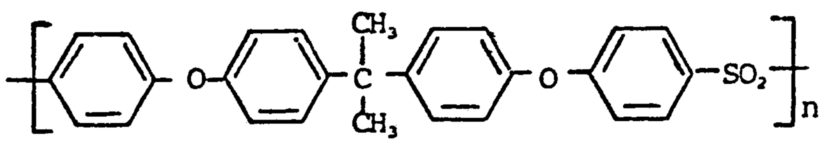

und besitzt eine reduzierte Viskosität von 0,08. Durch Abmischen von 239,5 g der Mischung C mit 200 g der Mischung B aus Beispiel 1 wird, wie in Beispiel 1 beschrieben, eine Grundschichtdispersion hergestellt. Die Grundschichtdispersion wird mittels Spritzpistole auf Aluminiumplatten bis zu einer Schichtstärke von 20 µm aufgetragen. Die Oberfläche der Aluminiumplatten wurde zuvor durch Sandstrahlen mit Korund (100 bis 120 µm Korngröße) bis zu einer Tiefe von 5 bis 10 µm aufgerauht. Nach Stehenlassen bei Raumtemperatur für 10 Minuten wird eine 60 Gew.-% Feststoff enthaltende, in Beispiel 1 beschriebene Polytetrafluorethylen-Dispersion aufgetragen. Dann werden beide Schichten 10 Minuten bei 90 °C und 10 Minuten bei 250 °C getrocknet und 10 Minuten bei 400 °C eingebrannt.

Die Haftfestigkeit der so hergestelltcn Beschichtung beträgt nach DIN-Norm 53 151 GT 0.

**Beispiel 9**

Zu 545 g einer 9 %igen Polyethersulfon-Suspension, die wie in Beispiel 7 beschrieben hergestellt wurde, werden 7 g eines nichtionischen Netzmittels (Oxtylphenol, oxethyliert mit im Mittel 9 Ethylenoxid-Einheiten) gelöst. Zu dieser Suspension werden unter Rühren 80 g Polyphenylensulfid (Schmelzpunkt 280 °C) und 12 g Farbruß hinzugefügt.

Die Mischung wird auf einer Kugelmühle 18 Stunden gemahlen.

Durch Abmischen von 239,5 g dieser Mischung mit 200 g der Mischung B aus Beispiel 1 wird, wie in Beispiel 1 beschrieben, eine Grundschichtdispersion hergestellt und auf sandgestrahlte Aluminiumplatten aufgetragen und mit der Deckschicht gemäß Beispiel 1 versehen. Die 10 Minuten bei 90 °C und 10 Minuten bei 250 °C getrocknete und 10 Minuten bei 420 °C eingebrannte Beschichtung besitzt eine Haftfestigkeit nach DIN 53 151 von GT 0.

**Beispiel 10**

100 g eines Polyetherketons (bestehend im wesentlichen aus wiederkehrenden Einheiten der Formel

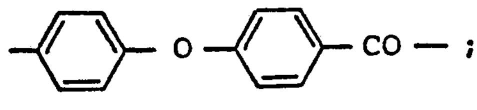

inhärente Viskosität 0,14, gemessen an 1 g des Polyetherketons in 100 $cm^3$ konzentrierter $H_2SO_4$ bei 25 °C) werden in 10 kg konzentrierter Schwefelsäure gelöst. Die Lösung wird unter Rühren in 50 l Wasser getroPft.

Der dabei sich bildende Niederschlag aus feinverteiltem Polyetherketon wird abfiltriert und mit Wasser neutral gewaschen, der Filterkuchen aufgenommen und soviel Wasser hinzugefügt, bis das Gesamtgewicht Polyetherketon und Wasser 1 kg beträgt. Anschließend werden 5 g eines nichtionischen Netzmittels (Ocrylphenol oxethyliert mit im Mittel 9 Ethylenoxid-Einheiten) unter Rühren zugemischt. Die Mischung wird dann 24 Stunden in einer Kugelmühle gemahlen.

Zu 50 g einer so erhaltenen 10 gew.-%igen Suspension werden 10 g einer 50 gew.-%igen Terpolymer-Dispersion hinzugemischt. Dieses Teryolymere besteht aus 1,5 Gew.-% an copolymerisierten Hexafluorpropylen-Einheiten, 3,5 Gew.-% an copolymerisierten Perfluor(propylvinyl)-ether-Einheiten und 95 Gew.-% an copolymerisierten Tetrafluorethylen-Einheiten und besitzt einen Schmelzpunkt von 307°C und einen Schmelzindex von 30 g/10 min (372°C; 5 kg Belastung). Zu dieser Mischung wird unter Rühren eine zweite Mischung, die durch Lösen von 0,3 g Lithiumhydroxid und 3 g auf thermischem Wege hergestelltes Siliciumdioxid in 13,2 g Wasser erhalten wurde, hinzugefügt.

Die Grundschichtdispersion wird mittels Spritzpistole auf Aluminiumplatten bis zu einer Schichtstärke von 20 µm aufgetragen. Die Oberfläche der Aluminiumplatten wurde zuvor durch Sandstrahlen mit Korund (100 bis 120 µm Korngröße) bis zu einer Tiefe von 5 bis 10 µm aufgerauht. Die beschichteten Aluminiumplatten werden 10 Minuten bei Raumtemperatur stehengelassen und anschließend wird eine Deckschichtdispersion mittels Spritzpistole aufgetragen. Diese Dispersion besitzt folgende Zusammensetzung: 100 Gewichtsteile einer 60 gew.-%igen Polytetrafluorethylen-Dispersion, 1 Gewichtsteil Natriumlaurylsulfat, 6,1 Gewichtsteile eines nichtionischen Netzmittels (Octylphenol oxethyliert mit im Mittel 9 Ethylenoxid-Einheiten) 3 Gewichtsteile Glykol, 1 Gewichtsteil Farbruß, 17,1 Gewichtsteile Titandioxid, 10 Gewichtsteile einer Lösung von 50 Gew.-% Siliconharz in Ethylacetat und Xylol (2: 1), 5 Gewichtsteile Xylol und 5 Gewichtsteile Tetralin. Beide Schichten werden 10 Minuten bei 90 °C und 10 Minuten bei 250 °C getrocknet und 10 Minuten bei 420 °C eingebrannt.

Auf der erhaltenen Beschichtung wird die Haftfestigkeit nach DIN 53 151 (Gitterschnitt-Test) geprüft. Man erhält eine Haftfestigkeit von GT 0.

**Patentansprüche**

1. Grundierungsmittel, bestehend im wesentlichen aus

a) 100 Gewichtsteilen eines Copolymeren, bestehend aus 0,5 bis 11 Gew.-% an copolymerisierten Einheiten eines Perfluor(alkylvinyl)-ethers der Formel $CF_2=CF\text{-}OR$, worin R ein Perfluoralkylrest mit 1 bis 10 C-Atomen ist, aus 0 bis 12 Gew.-% an copolymerisierten Einheiten des Hexafluorpropylens oder Vinylidenfluorids oder Gemischen dieser beiden Monomeren und aus copolymerisierten Einheiten des Tetrafluorethylens sowie gegebenenfalls aus dispergierten Polytetrafluorethylen-Teilchen mit einer mittleren Teilchengröße von 0,05 bis 30 µm, wobei das Gewichtsverhältnis des genannten Copolymeren zu dispergiertem Polytetrafluorethylen 100: 0 bis 20: 80 beträgt,

b) 10 bis 250 Gewichtsteilen der Gewichtssumme von Lithiumhydroxid plus suspendiertes, feinteiliges, auf thermischem Wege erzeugtes $SiO_2$, wobei das Molverhältnis LiOH zu $SiO_2$ 1: 0,5 bis 1: 30 beträgt,

c) 10 bis 1000 Gewichtsteilen mindestens eines thermoplastischen Harzes aus der Gruppe

$c_1$) der Polyarylensulfid-Harze;

$c_2$) der aromatischen Polyethersulfon-Harze; und

$c_3$) der aromatischen Polyetherketon-Harze; sowie

d) Wasser als flüssigem Träger.

2. Grundierungsmittel nach Anspruch 1, dadurch gekennzeichnet, daß auf 100 Gewichtsteile der Komponente a) 10 bis 100 Gewichtsteile der Komponente b) entfallen.

3. Grundierungsmittel nach einem oder mehreren der Ansprüche 1 bis 2, dadurch gekennzeichnet, daß auf 100 Gewichtsteile der Komponente a) 70 bis 300 Gewichtsteile der Komponente c) entfallen.

4. Grundierungsmittel nach einem oder mehreren der Ansprüche 1 bis 3, dadurch gekennzeichnet, daß das innerhalb der Komponente a) eingesetzte Copolymere aus 0,8 bis 6,0 Gew.-% an copolymerisierten Einheiten eines Perfluor(alkylvinyl)-ethers mit einem Perfluoralkylrest von 2 bis 4 C-Atomen und der Rest gegen 100 aus copolymerisierten Einheiten des Tetrafluorethylens besteht.

5. Grundierungsmittel nach einem oder mehreren der Ansprüche 1 bis 4, dadurch gekennzeichnet, daß das innerhalb der Komponente a) eingesetzte Copolymere aus 0,4 bis 3,0 Gew.-% an copolymerisierten Einheiten des Perfluor(propylvinyl)-ethers, aus 0,8 bis 6,0 Gew.-% an copolymerisierten Einheiten des Hexafluorpropylens und der Rest gegen 100 aus copolymerisierten Einheiten des Tetrafluorethylens besteht.

6. Grundierungsmittel nach einem oder mehreren der Ansprüche 1 bis 5, dadurch gekennzeichnet, daß das innerhalb der Komponente a) gegebenenfalls eingesetzte dispergierte Polytetrafluorethylen ein Polytetrafluorethylen-Wachs mit einer Schmelzviskosität von 1 bis $10^7$ Pa.s ist.

7. Grundierungsmitiel nach einem oder mehreren der Ansprüche 1 bis 6, dadurch gekennzeichnet, daß das innerhalb der Komponente a) gegebenenfalls eingesetzte dispergierte Polytetrafluorethvlen in a) in einem Anteil von bis zu 50 Gew.-% anwesend ist.

8. Grundierungsmittel nach einem oder mehreren der Ansprüche 1 bis 7, dadurch gekennzeichnet, daß das Polyarylensulfid-Harz der Komponente c) ein Polyphenylensulfid-Harz ist.

9. Grundierungsmittel nach einem oder mehreren der Ansprüche 1 bis 7, dadurch gekennzeichnet, daß das

aromatische Polyethersulfon-Harz im wesentlichen aus wiederkehrenden Einheiten der Formel

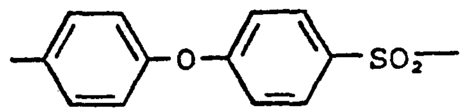

besteht.

10. Grundierungsmittel nach einem oder mehreren der Ansprüche 1 bis 7, dadurch gekennzeichnet, daß das aromatische Polyetherketon-Harz der Komponente c) im wesentlichen aus wiederkehrenden Einheiten der Formel

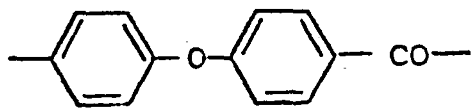

besteht.

11. Verwendung des Grundierungsmittels gemäß eincm oder mehreren der Ansprüche 1 bis 10 zur Bildung haftvermittelnder Überzüge auf Metallen, Glas oder keramischen Substraten, wobei anschließend mindestens eine Deckschicht, enthaltend ein Fluorkohlenstoffpolymeres, aufgebracht wird.

## Claims

1. A primer composition consisting essentially of

a) 100 parts by weight of a copolymer containing 0.5 to 11 % by weight of copolymerised units of a perfluoro(alkylvinyl) ether of the formula $CF_2=CF\text{-}OR$, wherein R is a perfluoroalkyl radical having 1 to 10 carbon atoms, of 0 to 12 % by weight of copolymerised units of hexafluoropropylene or vinylidene fluoride or mixtures of these two monomers, and of copolymerised units of tetrafluoroethylene and optionally of dispersed polytetrafluoroethylene particles having a mean particle size of 0.05to 30 μm, the weight ratio of said copolymer to dispersed polytetrafluoroethylene being 100: 0 to 20: 80,

b) 10 to 250 parts by weight of the total amount comprising lithium hydroxide plus suspended, finely divided $SiO_2$ produced by thermal treatment, the molar ratio of LiOH to $SiO_2$ being 1: 0.5 to 1: 30,

c) 10 to 1000 parts by weight of at least one thermoplastic resin from the group comprising

$c_1$) polyarylene sulfide resins,

$c_2$) aromatic polyether-sulfone resins, and

$c_3$) aromatic polyether-ketone resins, and

d) water as a liquid carrier.

2. A primer composition as claimed in claim 1, characterised in that 10 to 100 parts by weight of component b) are employed per 100 parts by weight of component a).

3. A primer composition as claimed in one or more of claims 1 and 2, characterised in that 70 to 300 parts by weight of component c) are employed per 100 parts by weight of component a).

4. A primer composition as claimed in one or more of claims 1 to 3, characterised in that the copolymer of component a) contains 0.8 to 6.0 K by weight of copolymerised units of a perfluoro(alkylvinyl) ether containing a perfluoroalkyl radical which has 2 to 4 carbon atoms, and the remainder, based on 100, are copolymerised units of tetrafluoroethylene.

5. A primer composition as claimed in one or more of claims 1 to 4, characterised in that the copolymer of component a) contains 0.4 to 3.0 % by weight of copolymerised units of perfluoro(propylvinyl) ether and of 0.8 to 6.0 % by weight of copolymerised units of hexafluoropropylene, and the remainder, based on 100, are copolymerised units of tetrafluoroethylene.

6. A primer composition as claimed in one or more of claims 1 to 5, characterised in that said dispersed polytetrafluoroethylene optionally included in component a) is a polytetrafluoroethylene wax having a melt viscosity of 1 to $10^7$ Pa s.

7. A primer composition as claimed in one or more of claims 1 to 6, characterised in that the dispersed polytetrafluoroethylene of component a) is present in a) in an amount of up to 50 % by weight.

8. A primer composition as claimed in one or more of claims 1 to 7, characterised in that the polyarylene sulfide resin of component c) is a polyphenylene sulfide resin.

9. A primer composition as claimed in one or more of claims 1 to 7, characterised in that the aromatic polyether-sulfone resin essentially consists of repeating units of the formula

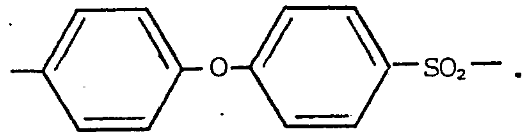

10. A primer composition as claimed in one or more of claims 1 to 7, characterised in that the aromatic polyether-ketone resin of component c) essentially consists of repeating units of the formula

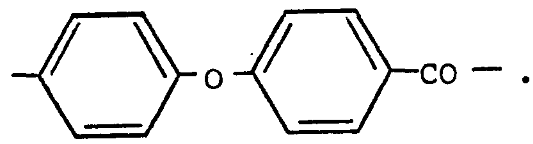

11. Use of the primer composition according to one or more of claims 1 to 10 for the forming of adhesion-promoting coatings on metal, glass or ceramic substrates which is subsequently covered by a top-coat containing a fluorocarbon polymer.

**Revendications**

1. Produit pour apprêt de base, consistant essentiellement en:

a) 100 parties en poids d'un copolymère, consistant en 0,5 à 11 %, en poids de motifs copolymérisés d'un éther de perfluoro(alkyle et vinyle) de formule $CF_2{=}CF\text{-}OR$, dans laquelle R représente un reste perfluoroalkyle ayant 1 à 10 atomes de carbone, en 0 à 12 % en poids de motifs copolymérisés de l'hexafluoropropylène ou du fluorure de vinylidène ou de mélanges de ces deux monomères et en des motifs copolymérisés du tétrafluoréthylène, ainsi qu'éventuellement en des particules dispersées de polytétrafluoréthylène, ayant une grosseur moyenne des particules de 0,05 à 30 µm, le rapport pondéral du copolymère précité au polytétrafluoréthylène dispersé se situant entre 100:0 et 20:80;

b) 10 à 250 parties en poids de la somme pondérale de l'hydroxyde de lithium plus du $SiO_2$ produit par voie thermique en fines particules, en suspension, le rapport molaire de LiOH à SiO se situant entre 1:0,5 et 1:30;

c) 10 à 1000 parties enpoids d'au moins une résine thermoplastique choisie dans l'ensemble formé par:

$c_1$) les résines du type poly(sulfure d'arylène);

$c_2$) les résines aromatiques de type polyéthersulfone; et

$c_3$) les résines aromatiques de type polyéthercétone; ainsi que

d) de l'eau comme véhicule liquide.

2. Produit pour apprêt de base selon la revendication 1, caractérisé en ce que 10 à 100 parties en poids du composant b) correspondent à 100 parties en poids du composant a).

3. Produit pour apprêt de base selon l'une des revendications 1 et 2, ou selon les deux, caractérisé en ce que 70 à 300 parties en poids du composant c) correspondent à 100 parties en poids du composant a).

4. Produit pour apprêt de base selon une ou plusieurs des revendications 1 à 3, caractérisé en ce le copolymère utilisé dans le cadre du composant a) consiste en 0,8 à 6,0 %, en poids de motifs copolymérisés d'un éther de perfluoro(alkyle et vinyle) ayant un reste perfluoralkyle comportant 2 à 4 atomes de carbone et le comylément à 100 consistant en des motifs copolymérisés du tétrafluoréthylène.

5. Produit pour apprêt de base selon une ou plusieurs des revendications 1 à 4, caractérisé en ce que le copolymère utilisé dans le cadre du composant a) consiste en 0,4 à 3,0 % en poids de motifs copolymérisés de l'éther de perfluoro(propyle et vinyle), en 0,8 à 6,0 %0 en poids de motifs copolymérisés de l'hexafluoropropylène et le complément à 100 étant constitué par des motifs copolymérisés du tétrafluoréthylène.

6. Produit pour apprêt de base selon une ou plusieurs des revendications 1 à 5, caractérisé en ce que le polytétrafluoréthylène éventuellement introduit sous forme dispersée dans le cadre du composant a) est une résine de polytétrafluoréthylène ayant à l'état fondu une viscosité de 1 à $10^7$ Pa.s.

7. Produit pour apprêt de base selon une ou plusieurs des revendications 1 à 6, caractérisé en ce que le polytétrafluoréthylène éventuellement introduit à l'état dispersé dans le cadre du composant a) est présent en a) en une proportion pouvant aller jusqu'à 50 à en poids.

8. Produit pour apprêt de base selon une ou plusieurs des revendications 1 à 7, caractérisé en ce que la résine de type poly(sulfure d'arylène) du composant c) est une résine de poly(sulfure de phénylène).

9. Produit pour apprêt de base selon une ou plusieurs des revendications 1 à 7, caractérisé en ce que la résine de polyéthersulfone aromatique consiste essentiellement en des motifs récurrents de formule:

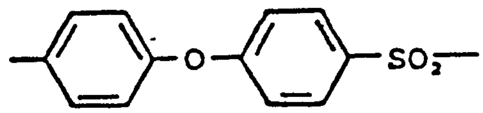

10. Produit pour apprêt de base selon une ou plusieurs des revendications 1 à 7, caractérisé en ce que la résine de polyéthercétone aromatique du composant c) consiste essentiellement en des motifs récurrents de formule:

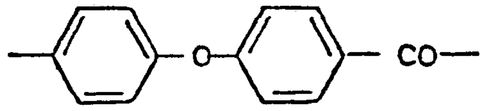

11. Utilisation du produit pour apprêt de base selon une ou plusieurs des revendications 1 à 10 pour former sur des métaux, du verre ou des subjectiles en matière céramique des revêtements à rôle d'agents de pontage, avec application ultérieure d'au moins une couche de couverture, consistant en un polymère fluorocarboné.